Europäisches Patentamt

European Patent Office

Office européen des brevets

(19)

(11) Publication number: **0 285 542**
**A1**

## (12) EUROPEAN PATENT APPLICATION

(21) Application number: **88500035.6**

(22) Date of filing: **28.03.88**

(51) Int. Cl.⁴: **A 01 G 23/06**

(30) Priority: **30.03.87 ES 8700898**
**10.03.88 ES 8800711**

(43) Date of publication of application:
**05.10.88 Bulletin 88/40**

(84) Designated Contracting States:
**AT CH DE FR GB GR IT LI SE**

(71) Applicant: **Torres Ortiz, Diego**
**General Varela, 3**
**E-10250 Garciaz (Cáceres) (ES)**

(72) Inventor: **Torres Ortiz, Diego**
**General Varela, 3**
**E-10250 Garciaz (Cáceres) (ES)**

(74) Representative: **Alonso Langle, Emilio Juan**
**c/o UDAPI, S.L. Segre, 18, Bajo**
**E-28002 Madrid (ES)**

(54) **Tool for uprooting brushwood and shrubs.**

㊼ The invention consists of a tool for uprooting brushwood and shrubs, whose configuration starts from a head for hitching onto a driving tractor, bearing two side plates (2) attached to the hitching head, and on the lower edge of those plates is attached a dettachable shovel (4). The upper portion of these plates is prolonged to form a backward projection, to link the end of the hydraulic cylinder (3), the free end of whose rod links between the lower ends of a pair of arms (8) that, on their upper ends, are also linked that extend from the plates to which the shovel is attached, backwards and in a sloping manner. The tool also has means to disengage any shrubs or branches that may remain attached to the shovel after uprooting, and a set of claws (12) to secure the tool into the ground and stabilize it during the performance of its work.

A second variation of this tool features a second shovel (22), installed facing the first shovel, so that betwen them both they encompass tree-trunks (25), to uproot and lift them.

FIG.-1

EP 0 285 542 A1

## Description

## TOOL FOR UPROOTING BRUSHWOOD AND SHRUBS

### PURPOSE OF THE INVENTION

This invention deals with a tool for uprooting brushwood and shrubs, whose specific purpose is to lift and pull out any brushwood, shrubs, and even large trunks of previously cut trees, as well as large roots, in order to clean the land and allow ploughing and seeding to be carried out.

### BACKGROUND OF THE INVENTION

No specific tools exist at the present time for the purpose of uprooting brushwood, shrubs, roots and similar; for the most part, this task is carried out by public works machines which, obviously, have not been conceived for this type of work; this results in a not too satisfactory performance, due to the fact that, on many occasions, the brushwood and shrubs have deeply buried roots of considerable length, which require suitable tools for their removal, to prevent cutting the roots off. This is what does happen with the currently used public works machines, giving raise to the risk of the roots sprouting again, thus preventing the land from being clean and suitable for the ploughing to be performed.

This means that there is no known tool or agricultural implement at present which will efficiently perform the uprooting of brushwood, shrubs, trunks, roots, etc.,since the type of machines utilized for these tasks, not having been designed for them, is not suitable and the results are not as desired.

### DESCRIPTION OF THE INVENTION

The tool proposed by the invention has been conceived to fully resolve the problem posed by the uprooting of brushwood and/or shrubs with their associated roots; to this end,it offers a structure which may be considered both rigid and simple, provided with the means to uproot brushwood and shrubs without any type of problems.

This tool is designed to be hitched on to a tractor, in a similar manner as any other farm implement, such as a plough, mouldboard, etc. It constitutes, therefore, the central head or hithching profile of the tool to the farm tractor. An iron plate is added on each side of the upper portion of the hitching head. These plates protrude from the upper side in reference to the head, and project backwards; they also protrude in the lower portion, to enable a shovel to be installed between them. This shovel, which is the uprooter element, can also be dettached.

Starting from the aforementioned iron plates, which may be considered as lugs, two integral profiles project rearwards, with a descending inclination; between the rear portion of these profiles are two articulated arms that project downwards and turn into horizontal arms; between them and the upper rear end of the iron plate that forms the lugs mentioned at the beginning, there is a hydraulic cylinder which will lift the tool assembly in order to perform the uprooting of the brushwood and/or shrubs.

The lower horizontal projection of the above mentioned arms will also incorporate a linked support from whose lower end emerge a set of claws that plunge into the earth; on the upper end of the arms a series of profiles are linked, which project up to the front of the tool. These profiles pass through a sort of bridge formed on each of the lateral surfaces of the plates or lugs mentioned at the beginning, and incorporate lower projections that contribute to the forward and backward movement of the tool assembly when activating the device located in the frontal part, destined to disengage the brushwood which, once uprooted, will normally remain attached to the shovel or between the profiles that form the tool. This element that frees the uprooted brushwood is formed by linked arms set on either side of the hitching head, and made rigid between themselves by means of the upper and lower crossbeams. The latter forms a sort of shovel to disengage and free the uprooted shrubs or material, using for this purpose the tool movements when the hydraulic cylinder is activated and, of course, the driving force of the tractor which actuates the tool.

A variation of the just described tool foresees that it be susceptible to incorporate a second shovel facing the first, previously described one, in such a way that the simultaneous action of both shovels will cause problem-free uprooting of, for instance, a tree-trunk, since both shovels encompass the trunk and facilitate its uprooting and subsequent lifting.

This second variation also foresees that the shovel teeth have a triangular profile, thus simplifying the uprooting or disengagement of the brushwood and tree-trunks.

Also added to this second variation of the tool, is that the support from whose lower end the claws emerge that attach the tool to the ground is not linked, as in the first version, but directly joined to the lower base of the arms to which the lower end of the hydraulic cylinder rod is linked.

This second variation of the tool does not incorporate the device used for the disengagement of brushwood which sometimes remaines attached to the shovel, as this device is only usable in specific cases, such as when uprooting brushwood or shrubs, in fact, but is unnecessary when tree-trunks are being uprooted and lifted.

### DESCRIPTION OF THE DRAWINGS

To complement the above description and in order to provide a better understanding of the different features of this invention, a set of drawings is added to the descriptive document herewith. These drawings are an integral part of the document and, in a representative but not limitative manner, represent the following:

Figure 1.- Schematic diagram, in lateral projection, of the tool for uprooting brushwood and shrubs object of this invention.

Figure 2.- Vertical projection of the tool, with some of the integral elements removed.

Figure 3.- A frontal view of the tool, with some elements also removed, to provide an easy view of the uprooting shovel attachment to the iron plate that forms the lugs secured to the laterals of the hitching head.

Figure 4.- A rear view of the tool in question.

Figure 5.- A detailed view of the sort of bridge arranged on each side of the plate that forms the lugs to which the shovel is attached. This bridge is the attachment point of one of the projections added to the profile that contribute in the movement of the device used to disengage and free the brushwood that may remain attached to the uprooting shovel.

Figure 6.- Schematic view of the tool itself as per one of its variations, in which it is provided with two shovels.

Figure 7.- A vertical projection of the tool shown in Figure 6, with some of its elements removed.

Figure 8.- A frontal view of the section of the tool that corresponds to Figures 6 and 7, with the linkage of the bearer arms of the second shovel in respect to the bearer arms of the first shovel. and the linking area of the end relevant to the hydraulic cylinder.

PREFERRED APPLICATION OF THE INVENTION

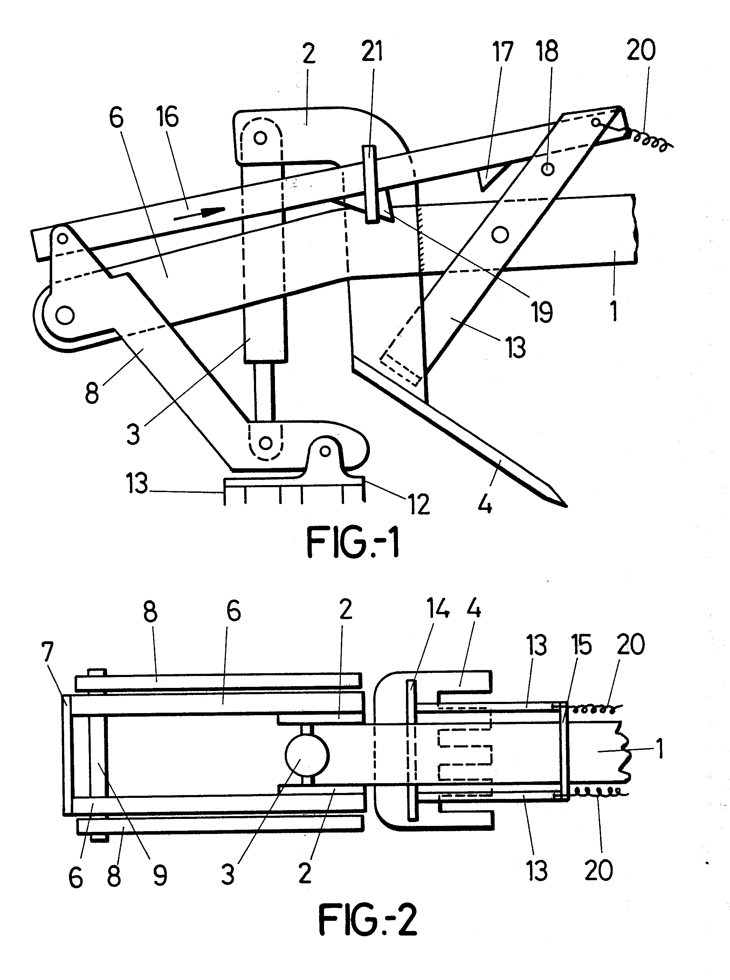

As can be seen in the figures, particularly in Figures 1 to 5 inclusive, the preferred application of the tool for uprooting brushwood is constituted by a conventional hitching head (1), to be hitched on to the third point of a tractor; thus, the tool may be lifted at will and transported by the tractor.

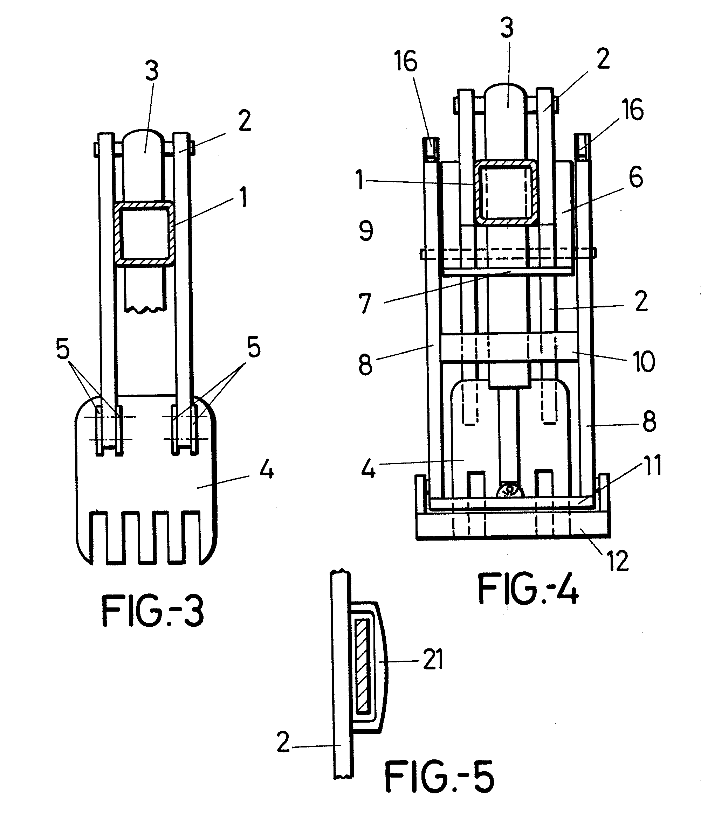

On the rear part of the head (1) and to its sides, two iron plates (2) have been attached, which protrude both in the upper and lower ends in respect to the beam that forms the hitching head (1), and projecting rearwards on the upper part. A hydraulic cylinder (3), capable of rotating, is incorporated between these plates; this cylinder (3) rod is attached to a point that will be described later. On the lower ends of these plates or lugs (2), a shovel (4) is attached, which will be performing the uprooting of the brushwood. The shovel is dettachable, to facilitate its replacement and for maintenance and repair purposes whenever necessary. This attachement between the lower ends of the plates or lugs (2) and the shovel (4) is achieved through small lugs (5) and the relevant screws or pins, as shown in Figure 3.

The lateral profiles (6) are attached (by welding or similar) to the plates (2) themselves and to the rear portion of the beam or hitching head (1). They project rearwards and are slightly tilted downwards, and become are made rigid by means of a rear crossbeam or profile (7). A bolt (9) has been arranged between profiles (6) and corresponding to their lower portion. The ends of bolt (9) protrude in the outer surface of these profiles (6), to link on them a set of arms (8) that are made rigid by means of reinforcing crossbeams (10) and (11); it must be noted that the free end of the hydraulic cylinder(3) rod is linked on crossbeam (11), as can be clearly seen in Figure 4.

Arms (8) prolong downwards into horizontal projections between which crossbeam (11) is located. A frame (12) is linked on these horizontal and lower extensions of arm (8). A series of sharp teeth or claws (13) that sink firmly in the ground are attached to the frame (12).

With the configuration just described, when it is wished to uproot brushwood or shrubs, use the tractor controls to lower the tool assembly until the shovel (4) sinks in the roots to be removed. Once the shovel is properly sunk, actuate on the hydraulic control of cylinder (3), until it lifts the complete assembly, thus uprooting the shrub. This uprooting will be helped by the lifting of the tool, but also by the forward drive caused on it by the tractor movement.

Logically, some branches, roots and even the complete uprooted shrub will remain attached to the shovel. To disengage and free such branches or shrubs from the tool, a device has been incorporated, in the form of profiles (13), one attached to each lateral of the beam or hitching head(1), as shown in Figure 1. These profiles, arranged in a sloping fashion, are joined in their lower rear end through a profile (14) which protrudes in respect to the separation between the profiles (13) themselves, and which are also joined by their frontal surface by means of another plate or profile (15), as shown in Figure 2. The assembly of the linkage of this element, formed by profiles (13) and reinforcement plates (14) and (15) is shaped into a sort of frame, thus enabling the mentioned disengagement of the uprooted brushwood or shrubs by taking advantage of the movements caused by the action of hydraulic cylinder (3), although it would certainly be possible to actuate this disengagement device by means of another hydraulic cylinder. In any case, and in order to take advantage of the action of cylinder (3) in a logical manner, it is foreseen that profiles (16) are linked on the upper end of the arms (8); these profiles cross the whole length of the tool, over profiles (6) and the hitching head (1) itself, and reach the upper edge of the previously mentioned profiles (13). Profiles (16) have a set of triangular cams (17) and (19) welded on to them, the latter larger in size than the former, so that when cylinder (3) presses on the tool assembly and lifts it, profiles (16) move forward, and cam (17) slides over pivot (18) of profiles (13), which sliding movement happens in a normal manner when the sloping form of cam (17) contacts over pivot (18), as can be clearly seen in Figure 1. However, when cam (17) is moving back, it is held by pivot (18), causing the profiles (13) to move in an arching manner; i.e., the frame formed by these profiles and the crossbeams that make them rigid.

The larger cam (19) is used to unlock cam (17) from pivot (18). This cam (19) is located in an area back of cam (17) and is made to go through a sort of bridge (21), attached to plates or lugs (2), as seen in detail of Figure 5. In other words, as profiles (16) move back, cam (19) tries to pass through bridge (21), causing the corresponding profile (16) to lift and the cam (17) to unlock in respect to plane (18).

A series of springs (20) have been added, to assist in these backward movements. They are secured between plates (13) and the forward portion of the beam or hitching head (1).

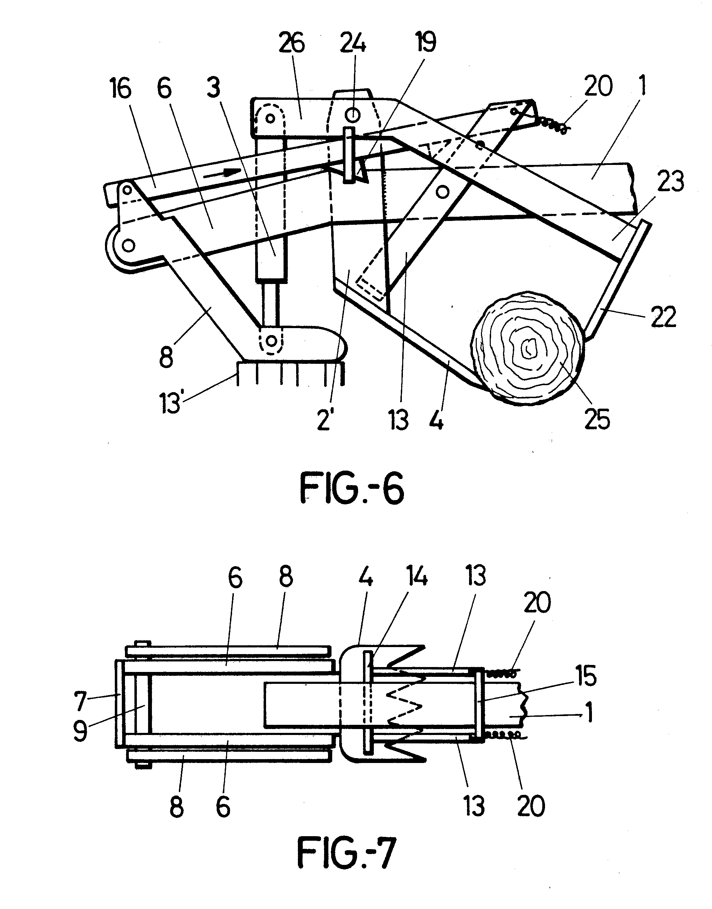

Figures 6 to 9 inclusive, as has already been stated, show a variation of the tool described herein, whose basic structure is kept, which means that the elements common to both tools keep the same references and the modified or newly introduced elements will have new references.

Thus, the tool variation shown in Figures 6 through 9 presents the same beam or hitching head (1), similar profiles (6), arms (8), etc. One of the new additions to this tool is a second shovel (22), installed facing the original shovel (4). In this instance, both shovels (4) and (22) have a triangular toothed edge. Shovel (22) is joined to the lateral arms (23), linked on plates (2'), and they move backwards from linkage area to link the corresponding hydraulic cylinder (3) between the extreme ends of these arms or their rear surface, as shown in Figure 6. Thus, the arms or plates (2') do not continue rearwards as in version shown in Figures 1 through 5, but end on the upper portion itself, and it is arms (23), bearing the new shovel (22), which project rearwards.

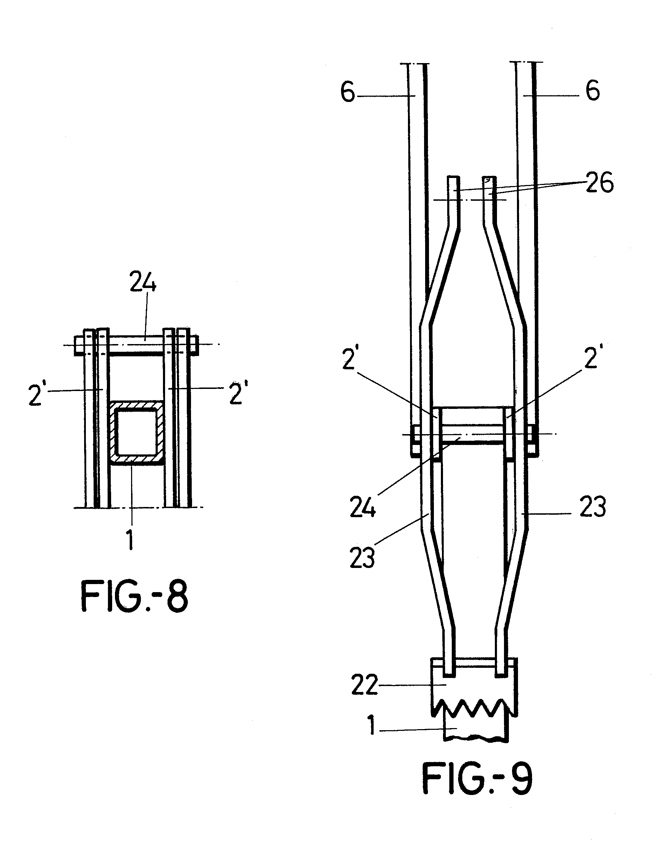

Figures 6 and 9 show that these arms (23), to which new shovel (23) is attached, are arranged laterally and to the outside with respect to arms or plates (2').

In accordance with this new configuration, when hydraulic cylinder (3) is actuated, and due to the subsequent lifting of the tool itself, as shovel (4) goes up, the other shovel (22) will travel in an angle and will tend to close towards shovel (4), as it is linked, and the lift of the tool will cause arms (23) of the shovel (22) to swivel in respect to link (24), which, in turn, will cause both shovels (4) and (22) to face one another and, therefore, to encompass tree-trunk (25), as shown in Figure 6, in order to uproot and lift it.

Figure 9 clearly shows the configuration of arms (23), to which the second shovel (22) is attached. in such a way that the arms (23) tend to converge towards the rear surface, to form the respective end segments, which are the rear projections (26) starting from link point (24) of arms (23), to allow the end of the hydraulic cylinder (3) to link exactly between these end segments (26), which are close to one another.

Even though the aforementioned figures have shown the elements that remove the branches and shrubs attached to the shovels, the present description has already stated that this second way of presenting the tool is susceptible to such a device not being installed.

Another variation or feature presented by this tool is that the claws (13') located at the end of arms (8) are attached to the lower end of said arms, and not linked through an intermediate support, as was the case in the version shown in Figures 1 through 5.

## Claims

1st.- Tool for the uprooting of brushwood and shrubs which is formed around a beam or hitching head for a driving tractor, by means of which the tool itself is actuated; this tool features as special characteristics two plates, forming lugs, attached to the sides of the hitching head. On their upper end, these lugs project upwards and backwards, while a dettachable toothed shovel is secured to their lower end, which is the uprooting element itself. Attached to these plates or lugs, and to the rear portion of the hitching head, there are also two profiles projected backwards, slightly sloped. Between these profiles , and on their correspondence with their lower end, two arms are linked, projecting downwards and backwards, and ending in forward horizontal projections on which a small toothed or clawed frame is linked, and which is plunged into the earth. Another feature is that a hydraulic cylinder is installed between these arm projections and the rear portion of the plates or lug mentioned at the beginning. The action of this cylinder causes the lifting of the tool assembly and this, together with the forward drive that the tractor produces on the tool, will be the cause of the uprooting of the brushwood or shrub in question.

2nd.- Tool for uprooting brushwood and shrubs, as per first claim, featuring two profiles linked on the sides of the beam or hitching head, before the plates or lugs to which the uprooting shovel is attached, which profiles are made rigid in their lower end by means of a crossbeam whose ends extend beyond the length determined by said profiles, whose upper ends are also made rigid by means of another crossbeam, thus shaping the assembly into a sort of tilting frame, capable of disengaging and freeing those uprooted shrubs that have remained attached to the shovel: featuring that another series of profiles or rods assist in the movement of this sort of handle, and that these profiles and rods are linked in their back portion between two projections foreseen to correspond with the upper part of the previously mentioned arms, while, on their forward end, these profiles or rods reach to the outer and upper end of the profiles linked to the beam or hitching head.

3rd.- Tool for uprooting brushwood and shrubs, as per first and second claims, featuring two triangular cams aligned with the lower edge of the plates or lugs that are linked to the profile that project from the rear portion of the beam or hitching head. The front cam is smaller in size than the rear cam, and works jointly with a pivot provided to this effect on the plates that form the device that disengages the uprooted shrubs; the rear, larger cam is located in a sort of bridge attached to the respective lateral side of the beam or hitching head, in such a manner that the forward movement of the rods where the cams are located when the cylinder is actuated, causes the front, smaller cam to go over the mentioned pivot and, on its return, is locked to it; the unlocking takes place by means of the lifting of such bars when the larger cam moves backwards and comes into contact with the bridge, thus lifting the rods and freeing the front cam from the corresponding pivot.

4th.- Tool for the uprooting of brushwood and shrubs, as per any of the previous claims, featuring the attacahment arms of the uprooting shovel that project straight upwards and bear a hole on each end; between these holes there is a bolt, on which a set of outer lateral arms are linked , whose rear portion projects to form two segments, between which the hydraulic actuating cylinder is precisely installed, while the frontal portion of said arms extends in a sloped manner and bears on the ends of a second shovel, of triangular profile, in such a manner that when the tool is lifted through the action of the hydraulic cylinder, this shovel tilts and, together with the second shovel, will encompass a tree-trunk and perform its uprooting and lifting.

5th.- Tool for the uprooting of brushwood and shrubs, as per the fourth claim, featuring the stable installation of the claws or teeth used for plunging into the ground and stabilizing the tool. These claws are installed on a plate that is attached to the relevant base that shaped the arms between which the free end of the hydraulic cylinder rod is linked.

6th.- Tool for uprooting of brushwood and shrubs, as per any of the previous claims, featuring triangular teeth on the first shovel.

FIG.-1

FIG.-2

0285542

FIG.-3

FIG.-4

FIG.-5

0285542

FIG.-6

FIG.-7

0285542

FIG.-8

FIG.-9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 244 560  (HAWKINS)<br>* Column 2, line 50 - column 4, line 4; figures 1-5 * | 1,5 | A 01 G   23/06 |
| A | AU-B-  434 290  (SYMONDS)<br>* Page 4, last paragraph - page 6, last parpgraph; figures 1-5 * | 1 | |
| A | US-A-4 372 063  (WORK)<br>* Column 2, line 12 - column 6, line 4; figures 2,3 * | 1,4 | |
| A | US-A-4 356 644  (HARKNESS)<br>* Column 2, line 51 - column 4, line 62; figures 1-5 * | 1,5,6 | |

TECHNICAL FIELDS SEARCHED (Int. Cl.4)

A 01 G

The present search report has been drawn up for all claims

| Place of search | Date of completion of the search | Examiner |
|---|---|---|
| THE HAGUE | 27-05-1988 | HERYGERS J.J. |

EPO FORM 1503 03.82 (P0401)